# EUROPEAN PATENT SPECIFICATION

(11) **EP 3 925 870 B1**
(45) Date of publication and mention of the grant of the patent: **20.09.2023**
(21) Application number: 21180202.0
(22) Date of filing: 18.06.2021
(51) Int. Cl.: B62K 21/12, B62L 3/02, B62M 25/04, B62K 23/06, B62K 15/00, B62J 6/03, B62J 6/055

(54) **BICYCLE HANDLEBAR MODULE COMBINING BRAKE LEVERS AND DERAILLEUR SHIFTER CONTROL DEVICES**
FAHRRADLENKERMODUL MIT KOMBINATION AUS BREMSHEBELN UND GANGSCHALTUNGSSTEUERUNGSVORRICHTUNGEN
MODULE DE GUIDON DE BICYCLETTE COMBINANT DES LEVIERS DE FREIN ET DES DISPOSITIFS DE COMMANDE DE DÉRAILLEUR DE CHANGEMENT DE VITESSE

(30) Priority: 18.06.2020 TW 109120506
(43) Date of publication of application: 22.12.2021
(73) Proprietor: Chen, Iwei, 510005 Changhua County (TW)
(72) Inventor: Chen, Iwei, 510005 Changhua County (TW)
(74) Representative: Lang, Christian

(56) References cited:
- EP-A1- 1 790 564
- CN-A- 103 910 016
- DE-U1-202017 001 538
- GB-A- 2 376 927
- GB-A- 2 530 144
- US-A- 5 269 196

## Description

### BACKGROUND OF THE INVENTION

### Field of Invention

The invention relates to a bicycle handlebar module combining brake levers and derailleur shifter control devices, in which the brake levers and the derailleur shifter control devices are combined with a bicycle handlebar to form a three-in-one modular structure.

### Related Art

Since bicycles have a large number of various parts and components that have standard specifications, the bicycle industry has formed a huge industrial supply chain over time. After professional production of various bicycle parts and components, they are sent to professional assembly factories for assembling externally and delivery. Among the main parts and components, such as the derailleur shifter control device in the transmission, the brake lever, the bicycle lamp and the direction lamp, etc. must be assembled on the bicycle handlebar. However, it has the following drawbacks: each of the parts and components must be connected with other accessories such as protective shell, joint, pivoting part or connector, etc., in order to have a complete finished appearance and structural design. After the parts and components are sent to assembly factories, the above-mentioned accessories are directly and exposedly assembled on the other parts and components of a bicycle. Therefore, there are too many joints, pivoting parts and connectors connected between the various parts and components of the bicycle, which not only make the assembly process complicated and time-consuming, but also increase the assembly cost, which indirectly lead to high cost of the bicycle as a whole. Thus, how to research and improve to tackle the above-mentioned problems by assembling with modular structures in order to effectively reduce the assembly time and assembly cost is indeed an object the relevant industries need to endeavor to achieve.

Document US 5 269 196 A discloses an injection molded plastic handlebar for a bicycle, which includes a plastic integral unit having a central hub portion, a support body and first and second laterally extending arm portions, wherein a stem member is provided extending through an aperture in the support body and including an insert plate welded to the stem member for rigidly attaching the stem member to the integral unit, wherein brake lever mounts are provided molded integrally with and extending forwardly from the arm portions, and wherein shift lever mounts are molded into an upper surface of the handlebar adjacent to the brake lever mounts. Said document US 5 269 196 A discloses a bicycle handlebar module according to the preamble of claim 1.

Document EP 1 790 564 A1 relates to a control device for a bicycle derailleur, such control device being installed on the straight end of a bicycle handlebar and comprises a brake lever, a support body connected to the handlebar, at least one manual actuation member to control upshifting or downshifting of the derailleur, a cable head holder for securely coupling a cable, a first mechanism and a second mechanism for movement transmission.

Document CN 103 910 016 A teaches another bicycle handlebar module which comprises a bicycle handlebar and two brake levers, as well as a bicycle comprising the same.

### SUMMARY OF THE INVENTION

The invention is invented in view of the above-mentioned drawbacks. A main object of the invention is to provide a bicycle handlebar module combining brake levers and derailleur shifter control devices according to claim 1, comprising: a bicycle handlebar, two ends of the bicycle handlebar are respectively formed with a grip part, and a front side of the bicycle handlebar near each of the two ends is respectively formed with a pivoting part and an accommodating part; two brake levers pivotally connected to the two pivoting parts with one end respectively, and the brake levers are exposed on the front side of the bicycle handlebar; and two derailleur shifter control devices respectively disposed in a corresponding one of the accommodating parts of the bicycle handlebar, wherein each derailleur shifter control device at least comprises a gear shift mechanism, a cable, a tension mechanism, and a release mechanism, the tension mechanism and the release mechanism being linked to rotation of the gear shift mechanism, the gear shift mechanism being connected to one end of the cable, the tension mechanism being capable of controlling to tension the cable by rotation of the gear shift mechanism, and wherein the release mechanism is capable of controlling to release the cable by rotation of the gear shift mechanism, wherein the derailleur shifter control device is installed in the bicycle handlebar in such a way that the tension mechanism and the release mechanism are exposed outside the bicycle handlebar.

Efficacies of the invention are:
The invention is capable of directly assembling the two brake levers, the derailleur shifter control devices, direction lamps, a front lamp and other parts and components on the bicycle handlebar to complete a modular assembly of the invention. Therefore, it can not only save assembly time and assembly cost, but also indirectly reduce an overall bicycle cost.

### BRIEF DESCRIPTION OF THE DRAWINGS

FIG. 1 is a perspective assembly view of a first embodiment of the invention;
FIG. 2 is an exploded perspective view of FIG. 1;
FIG. 3 is a side view of FIG. 1; and
FIG. 4 is a perspective assembly view of a second embodiment of the invention.

### DETAILED DESCRIPTION OF THE INVENTION

In order to enable a better understanding and recognition of the object, features and efficacies of the invention, please refer to the following detailed description of the preferred embodiments with reference to the drawings.

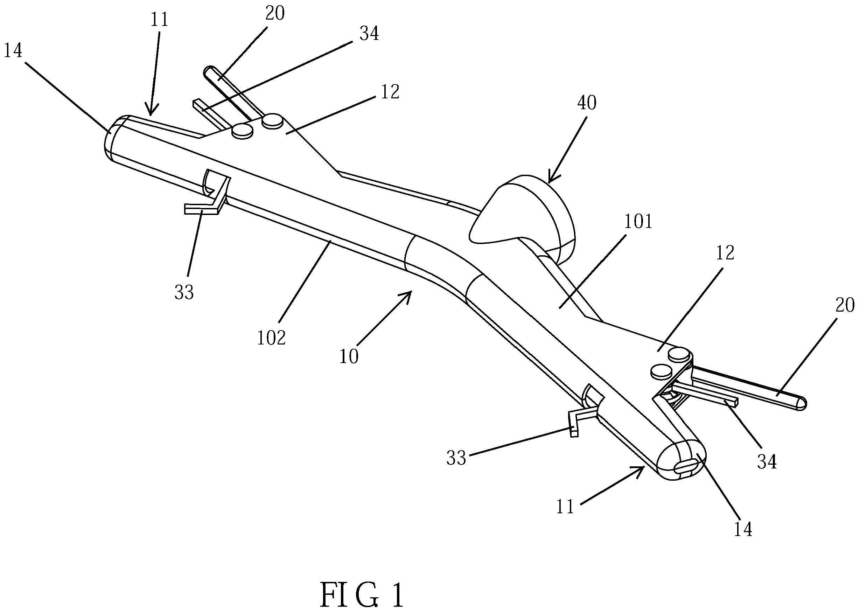

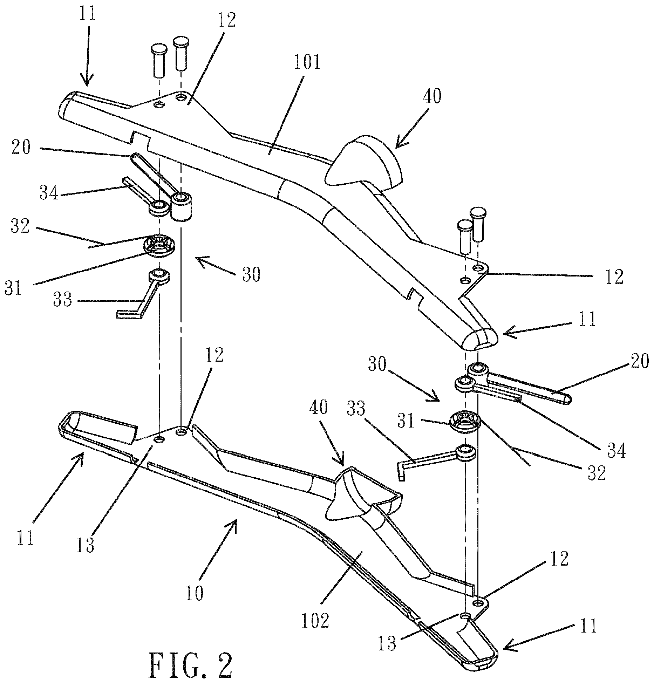

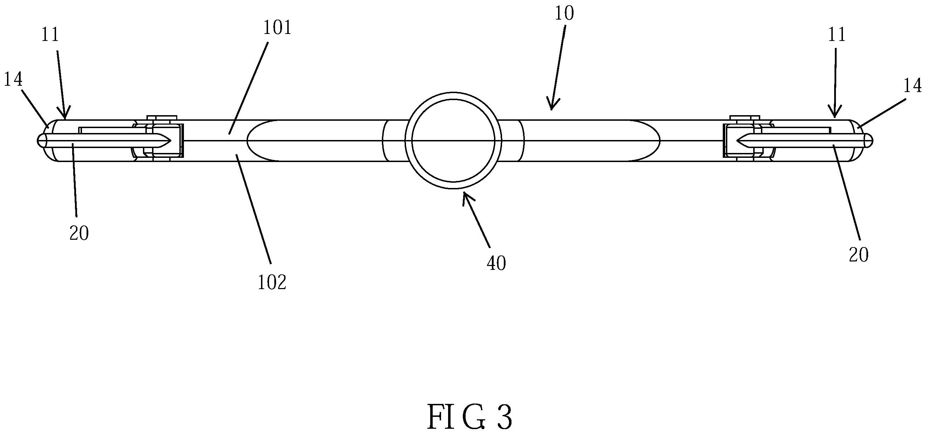

Please refer to FIGS. 1 to 3. The invention provides a bicycle handlebar module combining brake levers and derailleur shifter control devices, comprising:
a bicycle handlebar 10, wherein two ends of the bicycle handlebar 10 are respectively formed with a grip part 11, and a front side of the bicycle handlebar 10 near each of the two ends is respectively formed with a pivoting part 12 and an accommodating part 13, in addition, a front center of the bicycle handlebar 10 is provided with a front lamp 40;
two brake levers 20 pivotally connected to the two pivoting parts 12 with one end respectively, and the brake levers 20 are exposed on the front side of the bicycle handlebar 10; and
two derailleur shifter control devices 30 respectively disposed in the accommodating parts 13 of the bicycle handlebar 10, wherein the derailleur shifter control device 30 at least comprises a gear shift mechanism 31, a cable 32, a tension mechanism 33, and a release mechanism 34, wherein the tension mechanism 33 and the release mechanism 34 are linked to rotation of the gear shift mechanism 31, the gear shift mechanism 31 is connected to one end of the cable 32, the tension mechanism 33 is capable of controlling to tension the cable 32 by rotation of the gear shift mechanism 31, and the release mechanism 34 is capable of controlling to release the cable 32 by rotation of the gear shift mechanism 31, wherein the derailleur shifter control device 30 is installed in the bicycle handlebar 10 in such a way that the tension mechanism 33 and the release mechanism 34 are exposed outside the bicycle handlebar 10.

In one preferred embodiment, the bicycle handlebar 10 is in a shape of the letter v.

The bicycle handlebar 10 can be formed by combining an upper cover 101 and a lower cover 102.

Preferably, the two ends of the bicycle handlebar 10 are provided with a direction lamp 14 respectively.

The bicycle handlebar 10 can be folded at a center as a fulcrum.

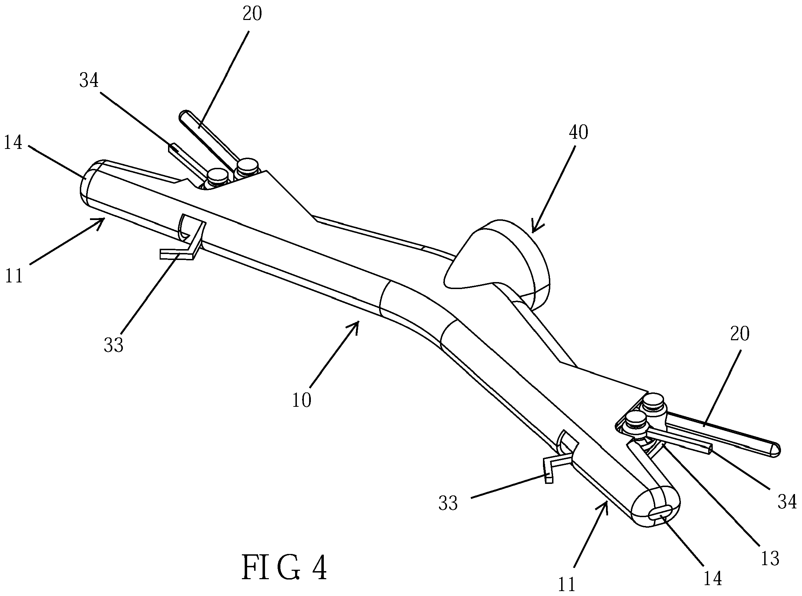

With the above-mentioned structure and composition design, a way in which the invention is assembled is described as follows:
(1) As shown in a first embodiment in FIGS. 1 to 3, after the two brake levers 20 and the two derailleur shifter control devices 30 are assembled into the lower cover 102 of the bicycle handlebar 10, the upper cover 101 of the bicycle handlebar 10 covers the lower cover 102, the brake levers 20 are exposed on the front side of the bicycle handlebar 10, the tension mechanisms 33 are exposed on a rear side of the bicycle handlebar 10, and the release mechanisms 34 are exposed on the front side of bicycle handlebar 10.
(2) As shown in a second embodiment in FIG. 4, the bicycle handlebar 10 is integrally formed, the pivoting parts 12 and the accommodating parts 13 are in a form of an upward hollow structure, and then the two brake levers 20 and the two derailleur shifter control devices 30 are directly assembled on the pivoting parts 12 and the accommodating parts 13 of the bicycle handlebar 10 respectively to complete the assembly of the invention.

With the structure of the above specific embodiments, the following effectiveness can be obtained:
The invention is capable of removing the original connectors, bases, and shells required for connecting the brake levers, derailleur shifter control devices, front lamp, and direction lamps to the bicycle handlebar, and the above-mentioned parts and components of bases, and shells are directly integrated on the bicycle handlebar 10 of the invention, and then the two brake levers 20, the gear shift mechanisms 31, the cables 32, the tension mechanisms 33, the release mechanisms 34, the direction lamps 14 and the front lamp 40 are assembled with the bicycle handlebar 10 to complete the modular assembly of the invention. Therefore, it can not only save assembly time and assembly cost, but also indirectly reduce the overall bicycle cost.

## Claims

1. A bicycle handlebar module combining brake levers and derailleur shifter control devices, comprising:
a bicycle handlebar (10), two ends of the bicycle handlebar (10) being respectively formed with a grip part (11), and a front side of the bicycle handlebar (10) near each of the two ends being respectively formed with a pivoting part (12) and an accommodating part (13); and
two brake levers (20) pivotally connected to the two pivoting parts (12) with one end respectively, and the brake levers (20) being exposed on the front side of the bicycle handlebar (10);
**characterized by** two derailleur shifter control devices (30) respectively disposed in the accommodating parts (13) of the bicycle handlebar (10), each derailleur shifter control device (30) comprising at least a gear shift mechanism (31), a cable (32), a tension mechanism (33) and a release mechanism (34), the tension mechanism (33) and the release mechanism (34) being linked to rotation of the gear shift mechanism (31), the gear shift mechanism (31) being connected to one end of the cable (32), the tension mechanism (33) being capable of controlling to tension the cable (32) by rotation of the gear shift mechanism (31), and the release mechanism (34) being capable of controlling to release the cable (32) by rotation of the gear shift mechanism (31), wherein each derailleur shifter control device (30) is installed in the bicycle handlebar (10) in such a way that the tension mechanism (33) and the release mechanism (34) thereof are exposed outside the bicycle handlebar (10).

2. The bicycle handlebar module combining the brake levers and the derailleur shifter control devices as claimed in claim 1, wherein the bicycle handlebar (10) is in a shape of the letter v.

3. The bicycle handlebar module combining the brake levers and the derailleur shifter control devices as claimed in claim 1, wherein the bicycle handlebar (10) is formed by combining an upper cover (101) and a lower cover (102).

4. The bicycle handlebar module combining the brake levers and the derailleur shifter control devices as claimed in claim 1, wherein a front center of the bicycle handlebar (10) is provided with a front lamp (40).

5. The bicycle handlebar module combining the brake levers and the derailleur shifter control devices as claimed in claim 1, wherein the bicycle handlebar (10) can be folded at a center as a fulcrum.

6. The bicycle handlebar module combining the brake levers and the derailleur shifter control devices as claimed in claim 1, wherein the two ends of the bicycle handlebar (10) are provided with a direction lamp (14) respectively.

## Patentansprüche

1. Fahrradlenkermodul mit einer Kombination aus Bremshebeln und Schaltvorrichtungen für eine Kettenschaltung, umfassend:
einen Fahrradlenker (10),
wobei zwei Enden des Fahrradlenkers (10) jeweils mit einem Griffteil (11) ausgebildet sind und eine Vorderseite des Fahrradlenkers (10) in der Nähe jeder der beiden Enden jeweils mit einem Drehteil (12) und einem Aufnahmeteil (13) ausgebildet ist; und
zwei Bremshebel (20), die mit jeweils einem Ende drehbar mit den beiden Drehteilen (12) verbunden sind, wobei die Bremshebel (20) an der Vorderseite des Fahrradlenkers (10) freiliegen;
**gekennzeichnet durch** zwei Schaltvorrichtungen für eine Kettenschaltung (30), die jeweils in den Aufnahmeteilen (13) des Fahrradlenkers (10) angeordnet sind, wobei jede Schaltvorrichtung für eine Kettenschaltung (30) mindestens einen Gangschaltmechanismus (31), ein Kabel (32), einen Spannmechanismus (33) und einen Auslösemechanismus (34) umfasst, wobei der Spannmechanismus (33) und der Auslösemechanismus (34) mit der Drehung des Gangschaltmechanismus (31) verbunden sind, wobei der Gangschaltmechanismus (31) mit einem Ende des Kabels (32) verbunden ist, der Spannmechanismus (33) in der Lage ist, das Spannen des Kabels (32) durch die Drehung des Gangschaltmechanismus (31) zu steuern, und der Auslösemechanismus (34) in der Lage ist, das Auslösen des Kabels (32) durch die Drehung des Gangschaltmechanismus (31) zu steuern, wobei jede Schaltvorrichtung für eine Kettenschaltung (30) im Fahrradlenker (10) so installiert ist, dass der Spannmechanismus (33) und der Auslösemechanismus (34) davon außerhalb des Fahrradlenkers (10) freiliegen.

2. Fahrradlenkermodul, das die Bremshebel und die Schaltvorrichtungen für eine Kettenschaltung nach Anspruch 1 kombiniert, wobei der Fahrradlenker (10) die Form des Buchstabens V hat.

3. Fahrradlenkermodul, das die Bremshebel und die Schaltvorrichtungen für eine Kettenschaltung nach Anspruch 1 kombiniert, wobei der Fahrradlenker (10) durch Kombination einer oberen Abdeckung (101) und einer unteren Abdeckung (102) gebildet ist.

4. Fahrradlenkermodul, das die Bremshebel und die Schaltvorrichtungen für eine Kettenschaltung nach Anspruch 1 kombiniert, wobei eine vordere Mitte des Fahrradlenkers (10) mit einer Frontlampe (40) versehen ist.

5. Fahrradlenkermodul, das die Bremshebel und die Schaltvorrichtungen für eine Kettenschaltung nach Anspruch 1 kombiniert, wobei der Fahrradlenker (10) an einer Mitte als Drehpunkt gefaltet werden kann.

6. Fahrradlenkermodul, das die Bremshebel und die Schaltvorrichtungen für eine Kettenschaltung nach Anspruch 1 kombiniert, wobei die beiden Enden der Fahrradlenker (10) jeweils mit einer Richtungslampe (14) versehen sind.

## Revendications

1. Module de guidon de bicyclette combinant des leviers de frein et des dispositifs de commande de manette de dérailleur, comprenant :
un guidon de bicyclette (10),
deux extrémités du guidon de bicyclette (10) étant respectivement dotées d'une partie de préhension (11), et un côté avant du guidon de bicyclette (10) près de chacune des deux extrémités étant respectivement doté d'une partie pivotante (12) et d'une partie de réception (13) ; et
deux leviers de frein (20) reliés de manière pivotante aux deux parties pivotantes (12) avec une extrémité respectivement, et les leviers de frein (20) étant exposés sur le côté avant du guidon de bicyclette (10) ;
**caractérisé par** deux dispositifs de commande de manette de dérailleur (30) respectivement disposés dans les parties de réception (13) du guidon de bicyclette (10), chaque dispositif de commande de manette de dérailleur (30) comprenant au moins un mécanisme de changement de vitesse (31), un câble (32), un mécanisme de tension (33) et un mécanisme de relâchement (34), le mécanisme de tension (33) et le mécanisme de relâchement (34) étant liés à la rotation du mécanisme de changement de vitesse (31), le mécanisme de changement de vitesse (31) étant relié à une extrémité du câble (32), le mécanisme de tension (33) étant capable de commander la tension du câble (32) par rotation du mécanisme de changement de vitesse (31), et le mécanisme de relâchement (34) étant capable de commander le relâchement du câble (32) par rotation du mécanisme de changement de vitesse (31), dans lequel chaque dispositif de commande de manette de dérailleur (30) est installé dans le guidon de bicyclette (10) de telle manière que le mécanisme de tension (33) et le mécanisme de relâchement (34) de celui-ci soient exposés hors du guidon de bicyclette (10).

2. Module de guidon de bicyclette combinant les leviers de frein et les dispositifs de commande de manette de dérailleur selon la revendication 1, dans lequel le guidon de bicyclette (10) présente une forme de lettre v.

3. Module de guidon de bicyclette combinant les leviers de frein et les dispositifs de commande de manette de dérailleur selon la revendication 1, dans lequel le guidon de bicyclette (10) est formé en combinant un cache supérieur (101) et un cache inférieur (102).

4. Module de guidon de bicyclette combinant les leviers de frein et les dispositifs de commande de manette de dérailleur selon la revendication 1, dans lequel un centre avant du guidon de bicyclette (10) est pourvu d'un feu avant (40).

5. Module de guidon de bicyclette combinant les leviers de frein et les dispositifs de commande de manette de dérailleur selon la revendication 1, dans lequel le guidon de bicyclette (10) peut être plié au niveau d'un centre servant de pivot.

6. Module de guidon de bicyclette combinant les leviers de frein et les dispositifs de commande de manette de dérailleur selon la revendication 1, dans lequel les deux extrémités du guidon de bicyclette (10) sont pourvues d'un clignotant (14) respectivement.
